# EUROPÄISCHE PATENTSCHRIFT

(11) **EP 1 234 495 B1**
(45) Veröffentlichungstag und Bekanntmachung des Hinweises auf die Patenterteilung: **16.01.2008**
(21) Anmeldenummer: 02003072.2
(22) Anmeldetag: 13.02.2002
(51) Int. Cl.: A01F 15/12, A01F 15/14

(54) **Ballenpresse mit einer Bindeeinrichtung**
Baler with tying device
Presse-botteleuse avec dispositif de liage

(30) Priorität: 20.02.2001 DE 10107950
(43) Veröffentlichungstag der Anmeldung: 28.08.2002
(73) Patentinhaber: Welger Maschinenfabrik GmbH, 38304 Wolfenbüttel (DE)
(72) Erfinder: Honhold, Joost, 38302 Wolfenbüttel (DE)
(74) Vertreter: Lins, Edgar

(56) Entgegenhaltungen:
- DE-C- 380 272
- DE-C- 682 001
- US-A- 2 477 059
- US-A- 2 989 172

## Beschreibung

Die Erfindung betrifft eine Ballenpresse mit einer Bindeeinrichtung mit wenigstens einer Bindenadel, welcher im Bereich zwischen Bindenadel und Presskanal eine Garnführung zugeordnet ist.

Derartige Ballenpressen werden für landwirtschaftliche Erntegüter aber auch zum Verdichten von Abfallmaterialien wie Papier, Folie oder Kartonagen eingesetzt. Das Material wird in einen Presskanal mit rechteckigem Presskanalquerschnitt gestopft und zu einem im Querschnitt rechteckigen Pressgutstrang verdichtet, aus dem quaderförmige Ballen abgeteilt und in vertikalen Längsebenen mit Bindegam umschlungen werden, das zu einer geschlossenen Schleife verknotet und abgetrennt wird.

In den beiden letzten Jahrzehnten zeigten sich Tendenzen zu so genannten Quader-Großballen, bei denen die Ballenquerschnitte bis über 1,2 m x 1,2 m betragen können. Derartig große Ballen benötigen zur Erzielung eines ausreichenden Zusammenhalts vier bis sechs in Querrichtung im Abstand nebeneinander liegende, straff um Ballen geschlungene und verknotete Bindegarnschleifen. Auf der Presskanaldecke sind entsprechend viele Knüpfapparate angeordnet, die mit unterhalb des Presskanals befindlichen Bindenadeln gleicher Anzahl zusammenwirken.

Da die Ballenpressen relativ schwer sind, werden in den letzten Jahren zunehmend Tandemachsen zur Bodenschonung eingesetzt. Außerdem werden Schneidwerke der Pick up nachgeschaltet.

Zum Einfädeln eines Bindfadens muss der von einer Gamvorratsrolle kommende Gamstrang von Hand durch eine Garnbremse, durch mehrere Garnführungsösen, durch das Bindenadelöhr geführt und dann das freie Garnende an einer gestellfesten Öse festgebunden werden. Hierzu legt sich der Bediener unter die Ballenpresse oder kniet zumindest darunter.

Durch die größere Breite des Presskanals, die höhere Anzahl der Bindenadeln sowie durch Schneidwerke und die Tandemachsen ist der Zugang zu den Bindenadeln und den Garnführungen noch gravierend verschlechtert worden und birgt darüber hinaus eine erhebliche Verletzungsgefahr.

Auch die in DE 682 001 offenbarte Vorrichtung, bei der eine Öse der Garnführung an einem schwenkbaren Hebel befestigt ist, der parallel zur Bewegungsebene der Bindenadel verschwenkbar ist, bietet für den Einfädelvorgang keine wesentliche Erleichterung. Die Öse befindet sich weiterhin im Maschinenbereich und ist daher schwer zugänglich.

Der Erfindung liegt die Aufgabe zugrunde, die eingangs beschriebene Ballenpresse so zu verbessern, dass das Einfädeln des Bindfadens leicht, schnell und ohne Verletzungsgefahr möglich ist.

Ausgehend von der eingangs beschriebenen Ballenpresse wird diese Aufgabe dadurch gelöst, dass die Garnführung/enmehrerer Bindenadeln auf einem Tragelement an der Ballenpresse gelagert sind, und dass mit dem Tragelement die Gamführungen aus einer Arbeitslage in eine Einfädellage außerhalb der Bewegungsebene der Bindenadel bewegbar sind.

Durch das Überführen der Garnführungen in eine Einfädellage außerhalb des Presskanals werden die Garnführungen in eine günstige Position gebracht, in der eine Bedienperson sicher und bequem im Stehen das Einfädeln durchführen kann. Anschließend werden die Garnführungen mit eingefädeltem Bindfaden in die Arbeitslage zurück überführt, in der sich jede Bindenadel jeweils einen Bindfaden für die weiteren, automatisch ablaufenden Bindevorgänge selbsttätig erfaßt und führt.

Zur weiteren Erläuterung der Erfindung wird auf die Zeichnungen und auf die nachfolgende Beschreibung zweier Ausführungsbeispiele verwiesen. In den Zeichnungen zeigen:
- Fig. 1: eine schematische Seitenansicht des Preßkanales einer Quader-Großballenpresse im Bereich der Bindeeinrichtung,
- Fig. 2: eine vergrößerte, perspektivische Ansicht einer ersten erfindungsgemäßen Garnführung in in Volllinie dargestellter Arbeitslage und in in Strichlinie gezeichneter Einfädellage mit einem eingefädelten Bindfaden,
- Fig. 3: einen Querschnitt durch die Nadelspitze einer Bindenadel gemäß Fig. 1 und 2 als Einzelteildarstellung und
- Fig. 4: eine zweite erfindungsgemäße Garnführung in einer Darstellung gemäß Fig. 2.

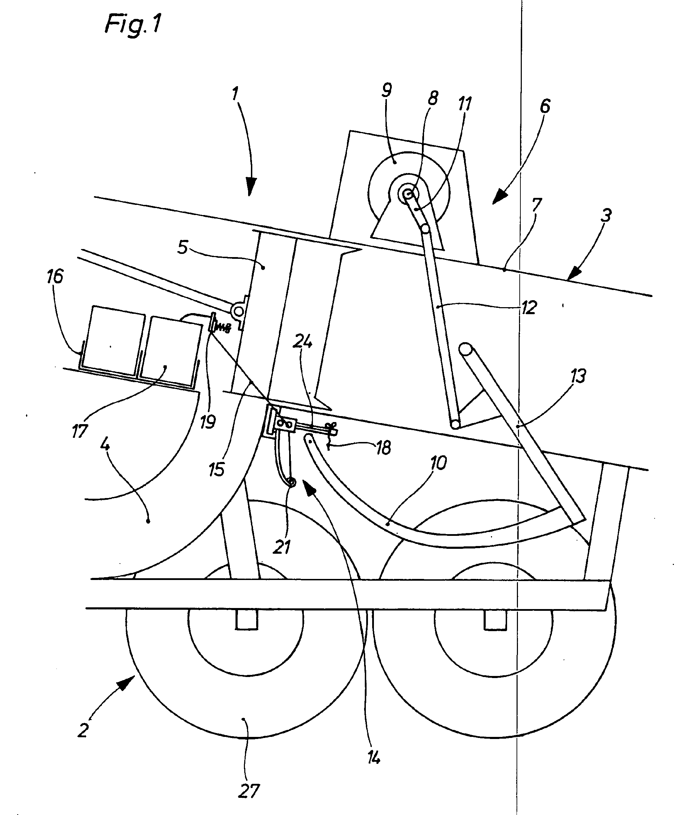

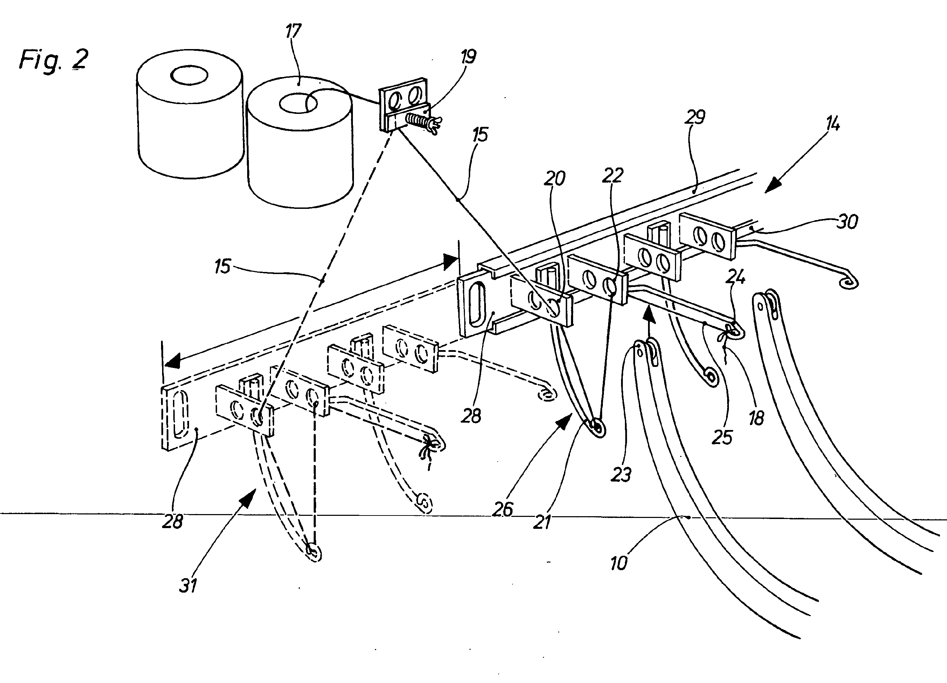

Die in Figur 1 nur teilweise dargestellte Quader-Großballenpresse 1 weist ein Tandemachs-Fahrgestell 2 auf, welches einen Preßkanal 3 trägt mit einem Zuführkanal 4 für das Erntegut, einem Preßkolben 5 und einer Bindeeinrichtung 6. Die Bindeeinrichtung 6 besteht in diesem Beispiel aus vier auf einer Preßkanaldecke 7 im Abstand nebeneinander angeordneten, auf einer Knoterwelle 8 gelagerten Knüpfapparaten 9. Von der Knoterwelle 8 wird der Antrieb der unterhalb des Preßkanales 3 angeordneten Bindenadeln 10 abgeleitet, wobei jedem Knüpfapparat 9 eine Bindenadel 10 zugeordnet ist. Die Antriebsübertragung erfolgt dabei über eine nicht dargestellte, auf der Knoterwelle 8 angeordnete Eintourenkupplung und eine Kurbel 11 zu einer Zugstange 12 und einem Schwingarm 13 zu den Bindenadeln 10. Während des Preßvorganges des Ballens ist der Antrieb zu den Bindenadeln 10 durch die Eintourenkupplung unterbrochen. Die Bindenadeln 10 befinden sich dabei außerhalb des Preßkanales 3, wie in Figur 1 und 2 ersichtlich. Unterhalb des Preßkanalbodens sind über die Breite des Preßkanales 3 jeweils mit Abstand nebeneinander entsprechend der Anzahl der Bindenadeln 10 verteilte Garnführungen 14 am Zuführkanal 4 gehaltert.

Die nachfolgende Beschreibung für die Garnführungen 14 und das Einfädeln eines Bindfadens 15 beziehen sich beispielhaft auf eine Hälfte der Ballenpresse 1, also auf zwei Knüpfapparate 9, wobei übersichtshalber nur ein Bindfaden 15 dargestellt ist. Für die andere Hälfte der Ballenpresse 1 gelten sinngemäß die gleichen Hinweise.

Seitlich vom Preßkanal 3 stehen in einem Garnvorratsbehälter 16 mehrere Garnrollen 17. Jeder aus dem Garnvorratsbehälter 16 herausgeführte Garnanfang 18 ist wie am besten aus Figur 2 ersichtlich einzeln durch eine Garnbremse 19 und eine erste Garnführungsöse 20, durch eine Garnspannfeder 21 und durch eine zweite Garnführungsöse 22 bis über die Nadelspitze 23 geführt und am gezeigten Halteelement 24 festgeknotet. Das Halteelement 24 ist zweifach gekröpft und in der Länge so ausgestaltet, daß sich der Garnabschnitt 25 in der Bewegungsebene der Bindenadelspitze 23 befindet, die eigentliche Bindenadel 10 aber beim Hochgang ungehindert an dem Halteelement 24 vorbeilaufen kann. In dieser Arbeitslage 26 der Garnführungen 14 nimmt die nach dem Auslösen der Eintourenkupplung hochgehende Bindenadel 10 den Bindfaden 15 nach oben zum Knüpfapparat 9 mit, wo der Bindfaden 15 mittels eines nicht gezeigten Garnhalters während des Preßvorganges gehalten wird. Die dabei benötigte Bindfadenlänge wird durch die Garnbremse 19, Garnführungsösen 20, 22 sowie durch die Garnspannfeder 21 nachgezogen.

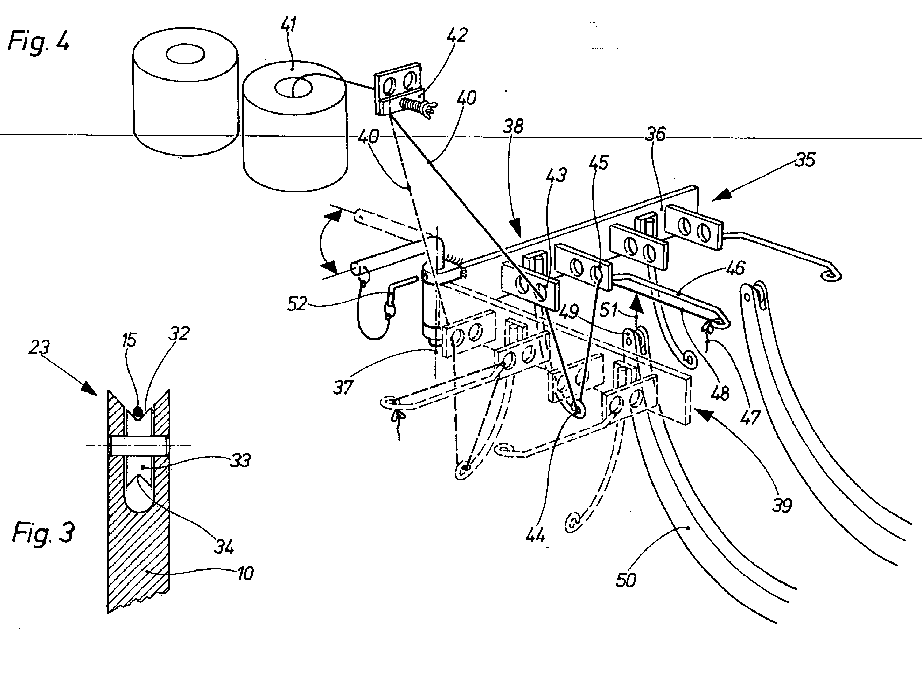

Da der Zugang zu den Garnführungen 14 in dieser Arbeitslage 26 durch die Bindenadeln 10 und die Tandemachse 27 nahezu unmöglich ist, sind die Garnführungen 14 jeweils einer halben Maschinenseite, also für zwei Bindenadeln 10, auf einem Tragelement 28 befestigt, das oben und unten in V-förmigen Gleitschienen 29, 30 rechtwinklig zur Bewegungsebene der Bindenadeln 10 in eine in Strichlinie gezeichnete Einfädellage 31 verschiebbar ist. In dieser Einfädellage 31 kann eine Bedienungsperson das Einfädeln leicht im Stehen durchführen und dann das Tragelement 28 mit dem eingefädelten Bindfaden 15 wieder in die in Volllinie dargestellte Arbeitslage 26 schieben, in der es durch nicht dargestellte Verriegelungsmittel festgelegt ist. Das bisher übliche Einfädeln eines Bindfadens durch ein Nadelöhr der Bindenadel entfällt, da die Bindenadelspitze 23 eine V-förmige Öffnung 32 aufweist und sich den Bindfaden 15 bei jedem Hochgang selbst in die Mulde einlegt, die zur Reibungsminderung von einer frei drehbaren Rolle 33 mit Schnurrille 34 gebildet wird, wie in Figur 3 gezeigt.

Bei dem in Figur 4 gezeigten Ausführungsbeispiel sind die Garnführungen 35 an einem Tragelement 36 befestigt, das um eine aufrechte, außerhalb des Preßkanales gelegene Schwenkachse 37 aus der in Volllinie gezeigten Arbeitslage 38 in die in Strichlinie gezeigte Einfädellage 39 schwenkbar ist. In der Einfädellage 39 wird der in Strichlinie gezeichnete Bindfaden 40 von der Garnrolle 41 durch die Garnbremse 42, die erste Garnführungsöse 43, die Garnspannfeder 44, die zweite Garnführungsöse 45 und von dieser zum Halteelement 46 gezogen, an dem der Bindfadenanfang 47 festgeknotet wird.

Nach dem Schwenken des Tragelementes 36 in die in Volllinie dargestellte Arbeitslage 38 nimmt der Bindfaden 40 seinen in Volllinie gezeichneten Verlauf ein, in der der Garnabschnitt 48 exakt mittig oberhalb der V-förmigen Bindenadelspitze 49 aufgespannt ist, so daß sich die Bindenadel 50 den Bindfaden 40 beim Hochgang in Richtung des Pfeiles 51 selbst einlegt. Mittels Stecker 52 ist das Tragelement 36 in seiner Arbeitslage verriegelbar.

Es ist im Rahmen der Erfindung auch denkbar, alle Garnführungen an einem gemeinsamen Tragelement anzuordnen, das sich zum Einfädeln leicht von der Ballenpresse abnehmen und nach außen bewegen läßt und anschließend im eingefädelten Zustand wieder in Arbeitslage und verriegelt wird.

## Patentansprüche

1. Ballenpresse mit einer Bindeeinrichtung (6) mit wenigstens einer Bindennadel (10, 50), welcher im Bereich zwischen Bindenadel (10, 50) und Presskanal (3) eine Garnführung (14, 35) zugeordnet ist, **dadurch gekennzeichnet, dass** die Garnführung/en (14, 35) mehrerer Bindenadeln (10, 50) auf einem Tragelement (28, 36) an der Ballenpresse (1) gelagert sind, und dass mit dem Tragelement (28, 36) die Garnführungen (14, 35) aus einer Arbeitslage (26, 38) in eine Einfädellage (31, 39) außerhalb der Bewegungsebene der Bindenadel (10, 50) bewegbar sind.

2. Ballenpresse nach Anspruch 1, **dadurch gekennzeichnet, dass** das Tragelement (28) im rechten Winkel zur Bewegungsebene der Bindenadel (10) verschiebbar ist.

3. Ballenpresse nach Anspruch 1, **dadurch gekennzeichnet, dass** das Tragelement (36) eine aufrechte Schwenkachse (37) aufweist.

4. Ballenpresse nach Anspruch 2 oder 3, **dadurch gekennzeichnet, dass** das Tragelement (28, 36) zusätzlich um eine etwa horizontale, quer zur Bewegungsebene der Bindenadel (10, 50) gelegene Schwenkachse verschwenkbar gelagert ist.

5. Ballenpresse nach Anspruch 1, **dadurch gekennzeichnet, dass** die Garnführungen auf einem Tragelement angeordnet sind, das leicht lös- und abnehmbar mit der Ballenpresse verbunden und zum Einfädeln herausnehm- und wieder leicht einhängbar ist.

6. Ballenpresse nach einem der vorhergehenden Ansprüche 2 bis 5, **dadurch gekennzeichnet, dass** das Tragelement (28, 36) für die Garnführungen (14, 35) geteilt ausgeführt ist, vorzugsweise mittig und jede Seite einzeln herauszieh-, ausschwenk- oder herausnehmbar ist.

7. Ballenpresse nach einem der vorhergehenden Ansprüche 2 bis 6, **gekennzeichnet durch** Mittel (52), welche das Tragelement (36) wenigstens in seiner Arbeitslage (38) verriegeln.

8. Ballenpresse nach einem oder mehreren der vorhergehenden Ansprüche, **dadurch gekennzeichnet, dass** die Garnführung (14, 35) eine oder mehrere Garnführungsösen (20, 22, 43, 45), Gamspannfedem (21, 44), Garnbremsen (19, 42) und wenigstens ein Halteelement (24, 46) zum Festbinden des Garnanfanges (18, 47) beim Einfädeln umfasst, welches so ausgebildet und angeordnet ist, dass der Bindfaden (15, 40) in der Bewegungsebene der Bindenadelspitze (23, 49) aufgespannt ist.

9. Ballenpresse nach einem oder mehreren der vorhergehenden Ansprüche, **gekennzeichnet durch** hydraulische, mechanische, elektrische und/oder pneumatische Hilfsantriebe zum Überführen der Garnführungen (14, 35) aus ihrer Arbeitslage (26, 38) in die Einfädellage (31, 39) und zurück.

10. Ballenpresse nach Anspruch 1, **dadurch gekennzeichnet, dass** die Nadelspitze (23, 49) der Bindenadel (10, 50) V-förmig mit nach oben gerichteter Öffnung (32) ausgebildet ist.

## Claims

1. A baler with a binding device (6) having at least one binding needle (10, 50) which is coordinated, in the area between the binding needle (10, 50) and the baling channel (3), with a yarn guide (14, 35),
**characterised in that**
the yarn guide(s) (14, 35) of a number of binding needles (10, 50) are mounted on a support element (28, 36) on the baler (1), and **in that** by means of the support element (28, 36) the yarn guides (14, 35) can be moved from an operating position (26, 38) to a threading position (31, 39) outside the plane of movement of the binding needle (10, 50).

2. Baler as in claim 1,
**characterised in that**
the support element (28) can be moved at a right angle to the plane of movement of the binding needle (10).

3. Baler as in claim 1,
**characterised in that**
the support element (36) has an upright swivel pin (37).

4. Baler as in claim 2 or 3,
**characterised in that**
the support element (28, 36) is additionally mounted so that it is able to pivot around a roughly horizontal swivel pin positioned at right angles to the plane of movement of the binding needle (10, 50).

5. Baler as in claim 1,
**characterised in that**
the yarn guides are arranged on a support element which is joined to the baler in such a manner that it can be readily detached and removed, and can be lifted out and easily replaced for threading.

6. Baler as in one of the preceding claims 2 to 5,
**characterised in that**
the support element (28, 36) for the yarn guides (14, 35) is made so that it is split, preferably in the centre, and that each side can be pulled, swivelled or lifted out separately.

7. Baler as in one of the preceding claims 2 to 6,
**characterised by**
means (52) which lock the support element (36) at least in its operating position (38).

8. Baler as in one or more of the preceding claims,
**characterised in that**
the yarn guide (14, 35) comprises one or more yarn guide eyes (20, 22, 43, 45), yarn tension springs (21, 44), yarn brakes (19, 42) and at least one holding element (24, 46) to secure the start of the yarn (18, 47) during the threading process, which is made and positioned in such a manner that the binder yarn (15, 40) is gripped in the plane of movement of the point (23, 49) of the binding needle.

9. Baler as in one or more of the preceding claims,
**characterised by**
hydraulic, mechanical, electrical and I or pneumatic auxiliary drives to move the yarn guides (14, 35) from their operating position (26, 38) to their threading position (31, 39) and back again.

10. Baler as in claim 1,
**characterised in that**
the point (23, 49) of the baling needle (10, 50) is made in a V shape with an opening (32) that points upwards.

## Revendications

1. Presse à balles comportant un dispositif de liage (6) doté d' au moins une aiguille de liage (10, 50), à laquelle est associé un guide-fil (14, 35) dans la zone située entre l'aiguille de liage (10, 50) et le canal de compression (3), **caractérisée en ce que** le(s) guide-fil(s) (14, 35) de plusieurs aiguilles de liage (10, 50) sont disposés sur un élément support (28, 36) sur la presse à balles (1), et **en ce que**, grâce à l'élément support (28, 36), les guide-fils (14, 35) peuvent être déplacés d'une position fonctionnelle (26, 38) à une position d'enfilage (31, 39) située en dehors du plan de déplacement de l'aiguille de liage (10, 50).

2. Presse à balles selon la revendication 1, **caractérisée en ce que** l'élément support (28) peut être déplacé à angle droit par rapport au plan de déplacement de l'aiguille de liage (10).

3. Presse à balles selon la revendication 1, **caractérisée en ce que** 1' élément support (36) présente un axe de pivotement (37) vertical.

4. Presse à balles selon la revendication 2 ou 3, **caractérisée en ce que** l'élément support (28, 36) est en outre disposé de manière à pouvoir pivoter autour d'un axe de pivotement quasiment horizontal, s'étendant transversalement au plan de déplacement de l'aiguille de liage (10, 50).

5. Presse à balles selon la revendication 1, **caractérisée en ce que** les guide-fils sont disposés sur un élément support qui est relié à la presse à balles de manière facilement démontable et amovible, et peut être retiré puis raccroché facilement aux fins d'enfilage.

6. Presse à balles selon l'une quelconque des revendications 2 à 5, **caractérisée en ce que** l'élément support (28, 36) destiné aux guide-fils (14, 35) est configuré en étant subdivisé, de préférence au centre, et chaque partie peut être extraite, amenée à pivoter vers l'extérieur ou retirée individuellement.

7. Presse à balles selon l'une quelconque des revendications précédentes 2 à 6, **caractérisée par** des moyens (52) qui verrouillent l'élément support (36) au moins dans sa position fonctionnelle (38).

8. Presse à balles selon une ou plusieurs des revendications précédentes, **caractérisée en ce que** le guide-fil (14, 35) comporte un ou plusieurs oeillets de guide-fil (20, 22, 43, 45), ressorts tendeurs de fil (21, 44), ralentisseurs de fil (19, 42) et au moins un élément de maintien (24, 46) permettant de relier fermement le début du fil (18, 47) lors de l'enfilage, qui est configuré et disposé de telle sorte que le fil de liage (15, 40) est serré dans le plan de déplacement de la pointe de l'aiguille de liage (23, 49).

9. Presse à balles selon une ou plusieurs des revendications précédentes, **caractérisée par** des entraînements auxiliaires hydrauliques, mécaniques, électriques et/ou pneumatiques permettant de faire passer les guide-fils (14, 35) de leur position fonctionnelle (26, 38) à la position d'enfilage (31, 39) et inversement.

10. Presse à balles selon la revendication 1, **caractérisée en ce que** la pointe (23, 49) de l'aiguille de liage (10, 50) est configurée en forme de V avec une ouverture (32) orientée vers le haut.
